# EUROPEAN PATENT APPLICATION

(11) **EP 4 465 594 A1**
(43) Date of publication of application: **20.11.2024**
(21) Application number: 23315201.6
(22) Date of filing: 16.05.2023
(51) Int. Cl.: H04L 9/40

(54) **A VIRTUAL FUNCTION ID WALLET**

(71) Applicant: THALES DIS FRANCE SAS, 92190 Meudon (FR); THALES DIS CPL USA, INC., Austin, TX 78759 (US)
(72) Inventor: Costard, Anne-Marie, 13122 VENTABREN (FR); Cates, Solomon, SCAPPOOSE, 97056 (US)
(74) Representative: Lotaut, Yacine Diaw

(57) **Abstract**

Provided is a Virtual Function ID Wallet (VFIDW) **150** containing a Verifiable Identity Document (VID) **131,** an Identifier **161,** and Verifiable Credentials (VC) **141** and keys pairs **171** associated with a workload **151** of a Virtual Function (VF) instance of a VF to be executed and trusted. The VFIDW **150** along with an Identity Agent **120** provide an identity presentation by way of a VID presentation to a Relying Party **160** to enable trust with the VF for the workload **151,** by adding relevant attributes from the VFIDW **150** described in security policies that prove identity and correct instantiation of the workload **151** of the VF instance. Other embodiments disclosed.

## Description

### TECHNICAL FIELD

The present invention relates generally to evolution of distributed and service-based architectures in telecommunications networks and in the cloud, and more particularly, to zero trust architecture implementations dealing with workload identities and container trust issues.

### BACKGROUND

As organizations drive digital transformation efforts to scale with increased connectivity for 5G, and through increased deployment of Internet of Things (IoT) solutions, they realize current approaches to managing and securing devices must be adapted to distributed and new environments. The telecommunications and cloud services are evolving towards distributed and service-based architecture with collaboration of centralized core and distributed edges, with a multiplicity of micro-services virtualized in containers, with no inherent trust between services.

Meanwhile there is a migration of services from on premise to public cloud multi-tenant infrastructure, shared by several service providers that do not trust each other. This new configuration will bring high cybersecurity challenges, requiring a zero-trust architecture in a distributed virtualized environment. A Zero Trust Architecture helps agencies build zero trust principles into industrial and enterprise infrastructure and workflows. Zero trust is an approach to cybersecurity that goes beyond trust but verify, and treats all networks and traffic as potential threats.

One of the essential assets used to ensure zero-trust architecture and secure communication between Virtual Function instances are standardized trustworthy workload identities. A workload is a running instance of an application. Workload identities are how workloads trust and get trusted by each other. Workload identities are nonhuman identities that require authentication through an identity provider within a device, such as applications, services, containers, security devices, and data backup services. Workloads need to communicate with other workloads to function and, in doing so, need a mechanism to prove their identity to others. At the same time, they often need to be able to validate the identity of callers. Like user identities, these workload identities can be both powerful and vulnerable. And, as companies increase their cloud presence, this workload identity population continues to grow. And due to unique characteristics of workload identities, it's much more difficult to manage than companies' user population.

One way for workloads to identify themselves is with a shared secret. This occurs when configuring a workload to use a secret such as an API token, key or username and password as part of the call. The workload serving the request is then required to look up the token in some way to ensure that it's authorized to perform the operation being carried out in the request. That is, at this time, identities of the workload may be generated automatically by the infrastructure and a key pair, comprising a public key and private key, is associated to the Virtual Function instance. However, certain limitations exist. Bad actors in control of a compromised secret to replay it and impersonate a workload. Once in possession of that secret, it's possible to use that secret anywhere to which there is network access. The use of the secret is unbounded. It's harder to rotate secrets like this as it requires updates to the client and server, where the secret is shared. However, this is difficult to do at scale and is accordingly done infrequently.

However, a means of provisioning and handling identities as well as a system to control the scope at which the identifiers is valid are still at issue. Accordingly, a need for better management and integration of digital identities for workloads remains..

### SUMMARY

Briefly, Self-sovereign identities (SSI) are digital identities that are managed in a decentralized manner. The SSI technology allows users to self-manage their digital identities without depending on third-party providers to store and centrally manage the data. In the domain of identification of person or legal entity, self-sovereign identities (SSI) in conjunction with Digital ID wallet technologies allows citizens and businesses to benefit from the availability of highly secure and trustworthy digital identity solutions. They can be used across the EU, with different secure and trustable attributes that have been issued by trusted parties, and enable the holder of the wallet to control its identity and the information revealed during the registration to digital services.

However, this kind of control of digital identity offered by SSI and Digital ID Wallets are applicable to persons and humans, but not for Virtual Function instances and software. Accordingly, provided herein is a method and system for a Virtual Function ID Wallet that combines aspects of the machine identity management technologies with aspects of user identity management principles utilized in Digital Wallet technologies. The inventive Virtual Function ID Wallet disclosed herein combines the technology for identification of Virtual Function instances with the technologies used for identification of persons and businesses. It is applicable to the context of elDAS2 regulation, such as the Self-Sovereign Identity, and EU Digital ID wallet, to obtain a standardized trustworthy digital identity solution for Virtual Function instance and controllable by the Virtual Function ID wallet.

In some embodiments, a system **100** for a Virtual Function Identity (ID) Wallet (VFIDW) **150** for Virtual Functions (VFs) in a distributed and Service-Based Architecture (SBA) is provided. The system **100** comprises and is characterized by: an Identity Management Server (IMS) **110,** an Identity Agent **120** and a Trusted Bundle Repository **190.** The IMS **110** manages and issues identities in a trust domain, and holds information about its identity agents and a workload **151** of a VF. The Identity Agent **120** proofs identities of the workload **151,** calls the workload, and securely communicates with the IMS **110.** It produces a Verifiable Identity Document (VID) **131** and Verifiable Credentials (VCs) **141** for the workload **151** of a VF instance of the VF. It manages, and can create, a Virtual Function ID Wallet (VFIDW) **150** containing identity information from an Identifier **161,** the VID **131,** VCs **141** and key pairs **171** associated with the workload **151** of a VF instance of the VF. The Trusted Bundle Repository **190** contains a mapping of IDs associated to the VID **131** with all information (e.g. public keys) associated to the VID **131** and VC **141** from which the Relying Party **160** communicatively coupled to Trusted Bundle Repository **190** verifies the workload **151** from the VID **131** and VC **141** to trust execution of the workload **151.** The VFIDW **150** with the Identity Agent **120** provides an identity presentation of the workload **151** to the Relying Party **160** to enable trust with the VF , by adding relevant attributes from the VFIDW **150** described in security policies that prove identity and correct instantiation of the workload **151** of the VF instance for.

In some embodiments, the Identity Agent **120** comprises: a VID Controller **121** of the Identity Agent **120** producing the Verifiable Identity Document (VID) **131,** and a VC Issuer **122** of the Identity Agent **120** producing the Verifiable Credentials (VCs) **141,** wherein the VC Issuer is a trusted party acting providing qualified attestation of attributes in the VFIDW **150**

In some embodiments, the Identity Agent **120** comprises an attester **124** that provides attestation reports for identity agent software and for each workload **151** related to VF/VFC instances that are associated to Identity Agent **120** in a CIS Cluster Node; a repository **123** with policies and selector entries for the attestation of the workload **151** related to VF or VF components; and a Verifiable Identity Document (VID) generator **125** to produce the VID **131** by way of an Identity Management Server **110** and an external Certificate Authority (CA) **170.**

In some embodiments, the VFIDW **150** is paired with a workload **151** that is a virtualization container comprising an identity, and wherein each workload **151** of a VFC **211** includes a VFIDW **150** that provides said identity of the VF instance. In some embodiments, the workload **151** of the VF instanceis software that runs in a virtualization container, and the workload identity ensures that the VF is trustworthy.

In some embodiments, trust is established with micro-services in a zero-trust architecture using the VFIDW **150** as a trustable micro-service identity document issued by the micro-service, and the zero-trust architecture comprises a multiplicity of micro-services virtualized in containers that are individually trusted each by way of a separate VFIDW, wherein trust is established amongst micro-services using the VID **131** issued by the VFIDW **150** for a respective VF.

In some embodiments, a policy is defined by a service provider or an operator of a telecom network, whereby the Relying Party **160** receives an Identity of the Virtual Function (VF) from the VFIDW **150** with relevant information in accordance with the policy.

In some embodiments, the VFIDW **150** provides an Identity presentation of the VF to the Relying Party **160** with attributes such that the VC **131** is relevant to a context and a trust domain where these identities of the VF are used.

In some embodiments, a Virtual Function Identity (ID) Wallet (VFIDW) **150** is provided for Virtual Functions (VFs) in a distributed and service-based architecture (SBA). The VFIDW **150** contains identity information associated to a workload **151** of a VF instance of a VF including, the workload Identifier **161,** a Verifiable Identity Document (VID) **131;** and Verifiable Credentials (VC) **141** for the VF Instance comprising attributes as verifiable credentials for the VF comprising one among its name, its role, its report of attestation, its certification result, the identity of the orchestrator that instantiated the VF instance and the time of instantiation, and, associated key pairs **171** for the VF Instance, wherein information that are relevant to verify the VID and VC are stored in a Trusted Bundle Repository **190** available to a Relying Party **160.** The VFIDW can provide to the Relying Party **160** an identity presentation by way of a VID **131** with the attributes as VCs **141** relevant to a domain where identities of the Virtual Function Instances are used, wherein the VFIDW **150** with the Identity Agent **120** provides an identity presentation to the Relying Party **160** to enable trust with the workload **151** of the VF, by adding relevant attributes from the VFIDW **150** described in security policies that prove identity and correct instantiation of the workload **151** of the VF instance.

In some embodiments, separate entries for identities of multiple VF instances of multiple workloads are contained each corresponding to a specific end-point, with attributes and parameters for each entry listing verifiable credentials needed in the VID 131 provided to the Relying Party connected to a respective end-point.

In some embodiments, the VFIDW includes a process to request to the Identity Agent **120,** the VID **131** of a third party, other entity, or other VF requesting communication with the VF. In other embodiments the VFIDW is partitioned for each component of the VF in a Cluster Node, and an Identity Agent 120 contains a key management system (KMS) with an access control to the VFIDW. In other embodiments, the VFIDW is included in a VF Instance (VFI) or VFC instance (VFCI) in a secure Hardware Mediated Execution Enclave (HMEE).

In some embodiments, the Identity Agent **120** is entirely included in the VF, or a VFC, in a secure Hardware Mediated Execution Enclave (HMEE), and the VFIDW contains only identity information of the VF, or the VFC managed by the Identity Agent **120.**

In some embodiments, a method for providing a Relying Party with a trust establishment of micro-services in a zero-trust architecture is provided using a Virtual Function Identity (ID) Wallet (VFIDW) **150** for Virtual Functions (VFs), characterized by: an Identity Management Server (IMS) **110** that manages and issues identities in a trust domain, and to hold information about its identity agents and a workload **151** of the VF; an Identity Agent **120** that proves identities of the workload **151** by way of attestation, calling the workload, and securely communicating with the IMS **110,** produces a Verifiable Identity Document (VID) **131** and Verifiable Credentials (VC) **141** for the workload **151** of a VF instance of the VF, and creates a Virtual Function ID Wallet (VFIDW) **150** containing identity information from the Identifier, the VID **131,** VCs **141** and key pairs **171** associated with the workload **151** of a VF instance of the VF ; and a Trusted Bundle Repository **190** containing information that are relevant for verifying the VID **131** and VC **141** from which a Relying Party **160** communicatively coupled to Trusted Bundle Repository **190** verifies the workload **151** from its associated VID **131** and VC **141** to trust execution of the workload **151.**

In some embodiments, the VFIDW **150** with the Identity Agent **120** provides an identity presentation to the Relying Party **160** to enable trust with the VF for the workload **151,** by adding relevant attributes in the VFIDW **150** described in security policies that prove identity and correct instantiation of the workload **151** of the VF instance.

### BRIEF DESCRIPTION OF THE DRAWINGS

The accompanying drawings, which are incorporated in and constitute a part of this description, illustrate embodiments consistent with the invention and, together with the description, serve to explain the principles of the invention.
**FIG. 1** depicts a system comprising a digital identity wallet and workload for virtual function in a distributed and service-based architecture in accordance with one embodiment;
**FIG 2A** illustrates an embodiment where the VF ID Wallet is partitioned;
**FIG 2B** illustrates an embodiment where the VF Identity Wallet is included in a VF instance (VFI) or VFC instance (VFCI);
**FIG 2C** illustrates an embodiment where the Identity Agent is entirely included in the VF or VFC and the VF ID Wallet contains information of the VF or VFC;
**FIG. 3** depict a system for Verifiable Identity Document (VID) presentation of verifiable credentials in a 3GPP domain and NFV domain in accordance with one embodiment;
**FIG 4** illustrates a process for creating and using a VF ID Wallet in a distributed and service-based architecture in accordance with one embodiment;
**FIGS 5A-5B** depicts a method of the process of FIG 4 for attestation of the Identity Agent, and provisioning of an Identity document of the Identity Agent in accordance with one embodiment;
**FIGS 6A-6E** depicts a method of the process of FIG 4 for creating a VF Identity Wallet (VFIDW) in accordance with one embodiment;
**FIG 7** depicts a method of the process of FIG 4 for adding Verifiable Credentials in the VFIDW in accordance with one embodiment; and
**FIG 8** depicts a method of the process of FIG 4 for using the VFIDW and interaction with a Third Party.

Specific embodiments in this invention have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The term "Workload" can be broadly defined as executable software of a component virtualized in a cloud infrastructure. A workload can be executed in a Virtual machine in a hypervisor-based virtualization environment or in a OS-container in a OS-container-based virtualization, as examples. The workload can be the application software of the VF instance, or VF Component Instance. This is essentially the executable software in the VM or OS-Container.

The term "Virtualization Container" (VC) can be broadly defined as a partition of a compute node that provides an isolated virtualized computation environment. Examples of virtualization container includes virtual machine and OS container. The term "OS Container" can be broadly defined as a virtualization container utilizing a shared Operating System (OS) kernel of its host. In some embodiments, the host providing the shared OS kernel can be a physical compute node or another virtualization container (e.g a VM).

The term "Container" can be broadly defined as an executable binary that is to be run by the host OS under a set of restrictions that are preset using an application (e.g., Docker) that knows how to tell the OS which restrictions to apply. The typical restrictions are process-isolation related, security related, such as using SELinux protection, and system-resource related, for instance related to memory, disk, CPU, and networking. Applications can inform the OS which boundaries to apply to a process while it is running, and interact directly with the underlying OS, or kernel components.

The term "Virtual Function" (VF) or "Virtual Application" (VA) can be broadly defines as a function designed to be deployed on a virtualized infrastructure. Depending on the virtualization technology used the virtual function/application could be deployed (i.e. instantiated) in Virtual Machines (VM) for hypervisor-based virtualization or in OS-Container for OS-Container-based virtualization. If the virtual function is a network function of a telecom service managed by a Network Function Virtualization (NFV) system, the VA is a VNF (Virtual Network Function). AVNF is one type of VA. AVNF is composed of VNF Components (VNFC).

The term "VNF" can be broadly defined as a Virtual Network Function. A "VNF Component" is composed of VNF Components (VNFC). Each VNFC executes a part of the VNF application software. The connection of VNFCs internally of the VNF is done through internal Virtual links. The VNF provides external connection points that enable the connection of the VNF to other VNFs or PNFs (Physical Network Functions) in the network service.

The term "VNF Instance" can be broadly defined as a deployment of the VNF in a virtualization Infrastructure. It uses virtualized resources (e.g. Compute, networking and storage). The VNF Instance is composed of VNF Components Instances (VNFCIs) that are instantiated on virtualization Containers (VC) that are Virtual Machines or OS containers. The VNFCI could use also optional virtual storage. Each VNFCI executes a part of the VNF application software. The connection of VNFCls internally of the VNF Instance is done through internal Virtual links. The VNF Instance provides external connection points that enable the connection of the VNFI to other VNFIs or PNFs in the network service. External VLs are part of the Network Service, not of the VNF.

The term "Virtual Machine" (VM) can be broadly defined as a virtualized computation environment that behaves very much like a physical computer/server. In some embodiments, a VM has all its elements (e.g., processor, memory/storage, interfaces/ports) of a physical computer/server, and is generated by a Hypervisor, which partitions the underlying physical resources and allocates them to VMs. Virtual Machines are capable of hosting a VNF Component (VNFC). In one arrangement, a Hypervisor may be implemented directly on the physical compute node (bare-metal) is termed a hypervisor type 1, and a Hypervisor be implemented on the Host-OS is termed a hypervisor type 2.

The term "Cloud Native VNF" can be broadly defined as a service that performs network duties in software, as opposed to purpose-built hardware. With a VNF, the same software that is used on a hardware-based network appliance is migrated to a virtual machine (VM). The cloud native VNF complies to cloud native principles, comprising: resiliency (self-healing), scaling, composition from modular VNF components, location independence, state handling, using published API, working as micro-services preferably using OS-containers, supporting zero-touch installation/configuration/instantiation, and automated resource management

The term "Micro-service" can be broadly defined as an atomic service module, delivered as an all-inclusive software package, that covers a specific and coherent functional scope, is consumable over network interfaces, is managed independently from other micro-services, and runs as a computing process, micro-services would ideally run in containers due to the lightweight characteristics of containers.

The term "VID" means Verifiable Identifier Document, which contains information associated with a VID, and typically expresses verification methods, such as cryptographic keys, and services relevant to interactions with the document. A "VID Controller" entity is a person, organization, or autonomous software that has the capability to make changes to a VID document. This capability is typically asserted by the control of a set of cryptographic keys used by software acting on behalf of the controller.

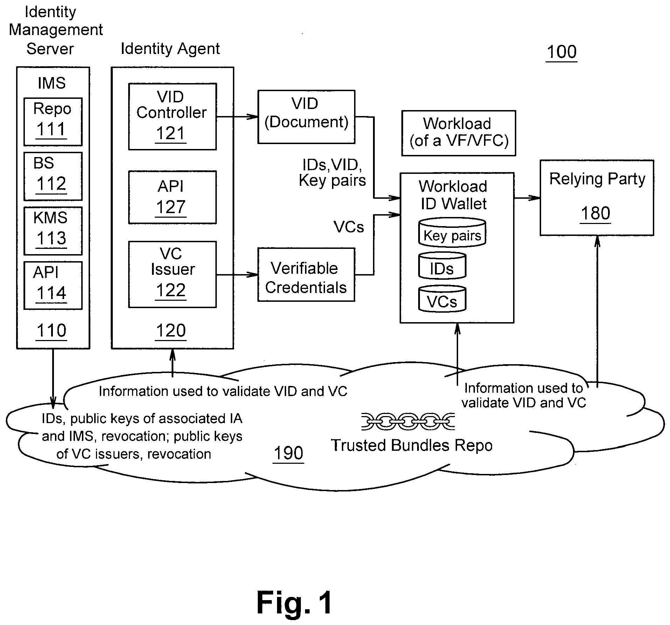

Referring to **FIG. 1** a system **100** for a Virtual Function ID Wallet (VFIDW) **150** for Virtual Functions (VF) in a distributed and service-based architecture is disclosed in accordance with one embodiment. The system **100** comprises an Identity Management Server (IMS) **110** communicatively coupled to an Identity Agent (IA) **120** that produces a Verifiable Identity Document (VID) **131** and Verifiable Credentials (VC) **141** directed to a Virtual Function ID Wallet (VFIDW) **150** associated with a particular Workload **151** (e.g. from a VF or multiple VFCs providing micro-services) which a Relying Party **180** can verify by way of the Trusted Bundles Repository **190.** The VID **131** is a document that includes an identifier ID, a key certificate and attributes. The VFIDW **150** with the IA **120** is able to provide an identity presentation relevant for a communicating party (such as Relying Party **180)** to enable trust with this VF, by adding the relevant attributes described in security policies that prove the identity and the correct instantiation.

By way of the workload ID wallet **150** (also referred to as a Virtual Function ID Wallet - VFIDW) and trust bundles repository **190** , an Identity Verifier, or service therefrom, can verify identity information from the Verifiable Identity Document (VID) **131** of the Relying Party **180** that communicates with the workload associated with a respective VF or VFC. Recall, the workload can be one application software component of the VF instance, or VF Component Instance. Also, a Virtual Function (VF) may have more than one VID **131.** As an example, a VID may be required for each end-point used for communication with external entities. The same relation applies to a Virtual Function Component contained in the VF that may have several identities.

The IMS **110** manages and issues all identities in a trust domain. The IMS **110** uses the data store repository **111** to hold information about its agents and workloads **150.** For example, such identity information consists of IDs, public keys of an associated Identity Agent and IMS, recovation; and, public keys of Verifiable Credential (VC) issuers, and revocation are stored in the trust bundle repository **190.** The IMS **110** can be managed either via API **114** or commands, and possesses VID signing keys securely handled by the Key Management System **113.** The IMS **110** also includes a boot strapping service **113** to verify the reports of attestation sent by the Identity Agent **110.** These components are discussed ahead in further detail. In some embodiments, the IMS **110** updates also the trust bundle repository **190** with the public key of Identity Agent **120** and public keys of qualified attestation of attributes providers.

The Identity Agent **120** includes a VID controller **121** to produce the VID Document **131,** and a Verifiable Credentials Issuer **122** to produce Verifiable Credentials (VC) **141.** The VID Document **131** and Verifiable Credentials (VC) **141** are included within the Virtual Function ID Wallet (VFIDW) **150** and directed to verifying a workload. Here, the Identity Agent **120** oversees the running workload **151** having its own VFIDW **150.** The VID Document **131** includes Identifier, verifiable attributes as Verifiable Credentials (VC) **141** and credential information related to the VFIDW 150, and information (e.g. public keys of issuers) needed to verify the VID and VCs are stored in the Trusted Bundles Repository **190.** Information used by the IA 120 to validate the VID 131 and VC 141 may be retrieved from the trust bundle repository **190.** In some embodiments, the Identity Agent **120** is included in the VFIDW **150** and is just one entity.

The Trusted Bundles Repository **190** can include various registries, for example, but not limited to, a VID registry and a VC registry among other data sources. The VID registry can contain all public keys for verification of the VID, public keys of identity agent and Identity Management Server **110** and VC registry all public keys of Verifiable Credentials (VC) Issuers **122** for verification of the VCs. This Repository **190** may be a database, storage, ledger, or blockchain to maintain bindings between an identifier and an identity attribute, and/or maintain bindings between the credentials and the parties, people or organizations involved. The blockchain provides for an encrypted decentralized storage system as one component of a decentralized identity architecture of the system **100** for workloads of a VF intance encompassing the decentralized identity wallet (VFIDW **150)** in accordance with one embodiment.

When the VC issuer **122** creates a verifiable credential, it contains information and parameters related to: who has issued (e.g., VID of the Issuer), to whom it is issued (e.g., Instance Identifier, attributes of the credential (e.g., Details of the credential being Issued), when it Issued (e.g., Date of issuance), Credential proof with Issuer signature that makes it tamper evident, and revocation details. Verifiable Credentials (VCs) allow people and organizations to issue statements on behalf of others. These statements are then verifiable even if the original issuer is no longer around. Whereas credentials represent statements made by an issuer, verifiable credentials represent statements made by an issuer in a tamper-evident and privacy-respecting manner. The verifiable credential is a tamper-evident credential that has authorship that can be cryptographically verified.

The Identity Agent **120** is informed of the workloads **150** it manages through the Identity Management Server **110** and stores this information in a repository **123,** which may include use of registration entries for assigning IDs to nodes and workloads **150.** The Identity Agent **120** serves the workload **151** API, and solves some related problems such as proofing the identity of workloads, calling the workload, and securely introducing itself to the IMS **110.** The IA **120** runs on every node on which an identified workload **151** runs, and it requests VIDs from the IMS **110** and caches them until a workload **151** requests its VID. The IA **120** exposes the Workload API to workloads on node and attests the identity of workloads that call it, and ultimately provides the identified workloads **151** with their VIDs. In this arrangement, the Identity Agent **120** performs significant tasks, but does not require active management. Rather, it receives information about the trust domain and the workloads that may inquire it directly from the IMS **110.**

The Relying Party **160** is communicatively coupled to the Trusted Bundles Repository **190** and the Virtual Function ID Wallet (VFIDW) **150** for virtual functions; for instance, execution of workload A **151.** The Relying Party **160** relies on public keys stored in the Trusted Bundles Repository **190** (e.g. stored in VID registry or VC registry) to verify the validity of VID and the validity of verifiable credential (VC) inside the VIDand establish the identity and status of a workload, role, or system or device. The public key of the CA may be included in the trust bundle repository. And, the distribution of such key can be accompished through the trust bundles repository **190.** This allows the relying party **160** to ensure the integrity of services related to that workload **151.**

Zero trust is a framework that assumes a complex network's security is always at risk to external and internal threats. Zero trust principles establish a governance model for sharing context between security tools to protect users' connections, data and resources. With zero trust, all network traffic is logged and inspected, network controls and access are limited, and network resources are secured and verified. In this zero trust framework, there is no traditional network edge; networks can be local, in the cloud, or a combination or hybrid with resources anywhere as well as workers in any location. Edge computing is performance that takes place at or near the physical location of either the user or the source of the data. By placing computing services closer to these locations, with Virtual Function ID Wallet (VFIDW) **150** for virtual functions, users benefit from faster, more reliable services while companies benefit from the flexibility of hybrid cloud computing.

By way of the zero trust framework of system **100,** a multiplicity of micro-services virtualized in containers can be individually trusted by way of the Virtual Function ID Wallet (VFIDW) **150,** which is applicable to cloud services and infrastructures, in the context of core network for telecom or any other services delivered in the cloud (e.g. sovereign cloud). Here the VFIDW **150** is seen paired with a workload **151** denoting that it may pair with other workloads (B, C, D .....). The Virtual Function ID Wallet **150** establishes trust in this new world of micro-services based architectures when considering sovereignty or private networks and other things where a micro-service, a Virtual Function (VF) as it's called in the 5G ecosystem and standards, reside. The virtual functions (VFs) have identities which are treated in this ecosystem as an entity or a sovereign thing onto itself. Each VF instance will have identity and each VF component instance will have identity. And, each workload **151** of a virtualization container will have an identity. So it's almost like imagining a sovereign identity for the virtual function itself, and, additionally, it has a digital wallet **150.** So each VF will have its digital wallet **150,** and that digital wallet **150** provides the identity of the VF.

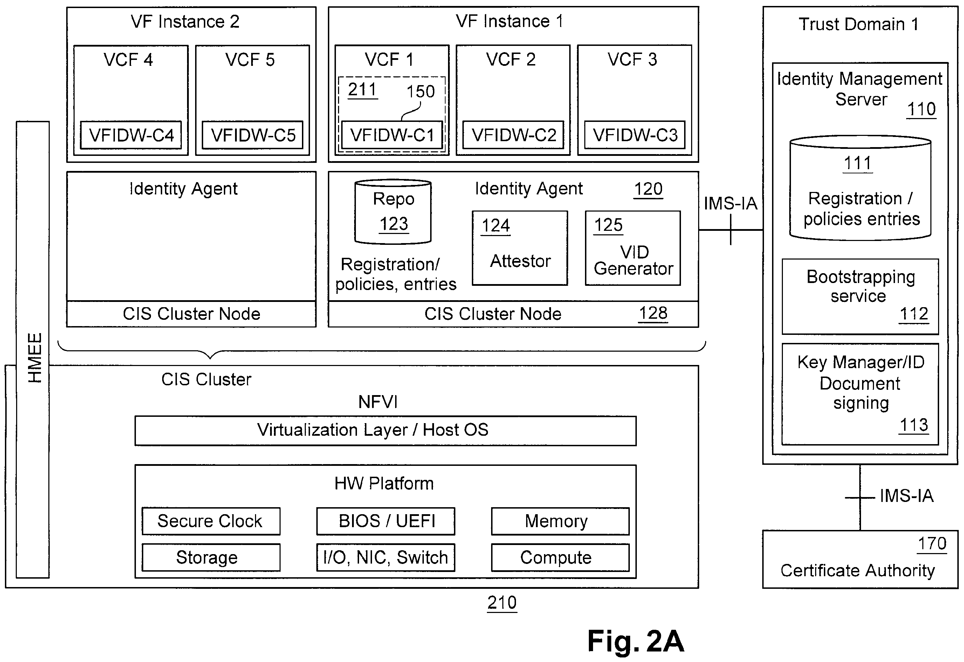

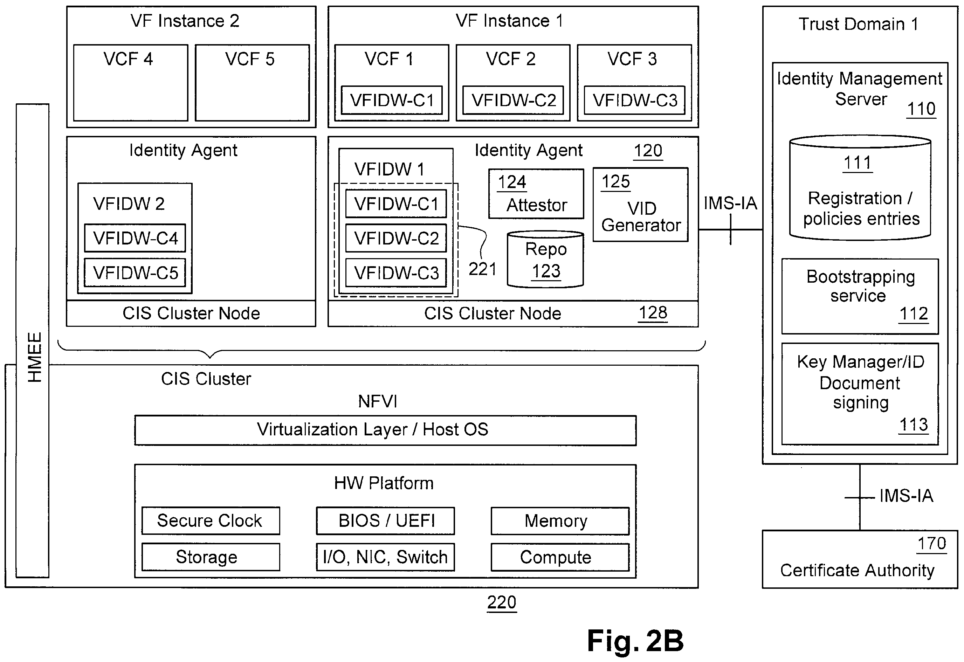

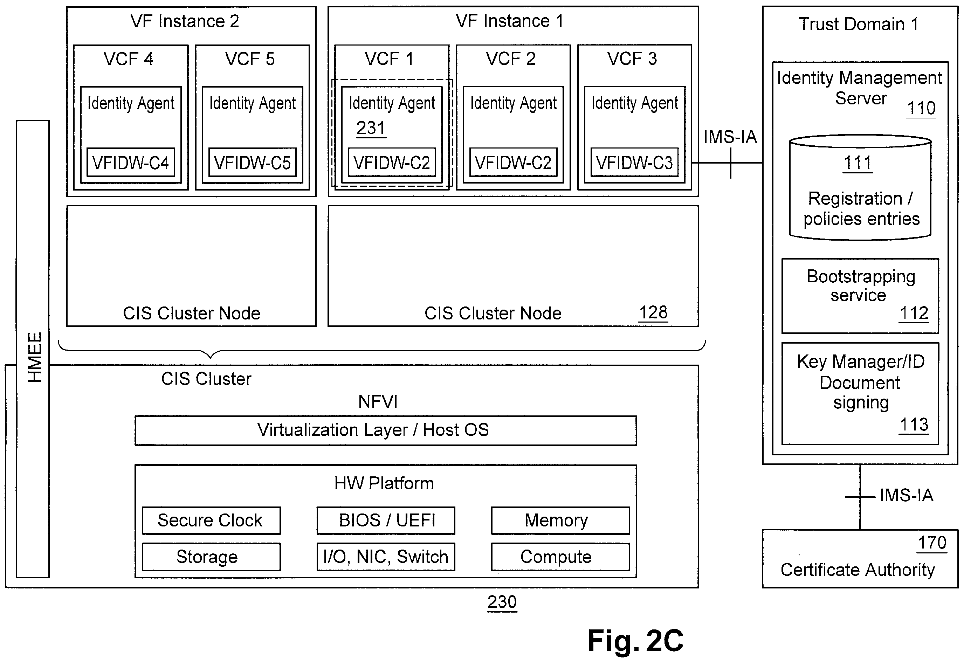

**FIGS 2A-2C** are more detailed representations of the system **100** of FIG. 1A, and extend the concept of the VFIDW **150** with a workload of a virtual function to multiple workloads and multiple components constituting VF instances related to a workload in various configurations. **FIG 2A** illustrates an embodiment where the VF Identity Wallet is included in the VF instance (VFI) or VFC instance (VFCI), preferably in a secure execution environment such as HMEE. **FIG 2B** illustrates another embodiment wherein the VF ID Wallet is partitioned (e.g. VFIDW- C1, VFIDW- C2, VFIDW- C3 ...) for each component of VF, in the Cluster Node. In this embodiment, the Identity agent also contains a key management system with an access control to the VF ID Wallet. **FIG 2C** illustrates another embodiment where the Identity Agent is entirely included in the VF or VFC, preferably in a secure execution environment such as HMEE. In this embodiment, the ID Wallet contains only the information of the VF or VFC. For each of **FIGS 2A-2C****,** the Identity Agent comprises a Repo **123,** Attestor **124,** and VID Generator **125.** And, each Identity Agent in the CIS Cluster includes similar components with similar operations. For example, Identity Agent **120** operates in CIS cluster node **128.**

Here, by way of the system architectures shown, trust can be established between, and across, micro-services (e.g. workloads) using a trustable micro-service identity document issued by the micro-service identity wallet; namely, the Virtual Function ID Wallet (VFIDW) **150,** which provides for trustworthy and multi-domain digital identification of the Virtual Function (VF) instances in a zero trust architecture. In this zero trust architecture all users, devices and machines, whether in or outside the organization's network, can be authenticated, authorized, and continuously validated before being granted access, or maintaining access, to applications, workloads and data.

In all embodiments shown in **FIGS 2A-2C**, VFID Wallet (VFIDW) **150** contains all identity information of the VF. This includes the identifier **161** of the VF, attributes as verifiable credentials **141** for the VF (e.g. its name, its role, its report of attestation, its certification result, etc.), and associated key pairs **171.** The VFIDW **150** may also contain, for each identity of the VF (corresponding to a specific end-point), parameters such as a default list of verifiable credentials that are needed in the VID provided to the relying party connected on this end-point. The VFID Wallet **150** can also include a process to generate the Certificate Signing Request for the verifiable Identity document to be presented to a third party (e.g., other entity, other VF, etc.) communicating with the VF. The VFID Wallet **150** may additionally include a process to request to the Identity Agent **120** the verification of Verifiable ID document **131** of the third party (e.g., other entity, other VF, etc.) willing to communicate, or communicating, with the VF. Access to the ID wallet is controlled to ensure that only an authorized party can access the content of the Wallet.

Briefly, in the embodiment of **FIG 2A**, the VF ID Wallet 150 is a hierarchical digital wallet including a partition for the VF instance comprising, but not limited to, i) Identifier **161** of the VF, ii) attributes as verifiable credentials **141** for the VF (e.g. its name, its role, its report of attestation, its certification result, etc.), and iii) and associated key pairs **171** (or just the certificate) for each external end-point of the VF. Also, partitions for each VF component instance constituting the VF instance comprise, but are not limited to: i) Identifier **161** of the VFC, ii) attributes as verifiable credentials **141** for the VFC (e.g. its name, its role, its report of attestation, its certification result, etc.), and iii) associated key pairs **171** (or just the certificate) for each external end-point of the VFC.

For each of **FIGS 2A-2C**, the Identity Management Server **110** includes the Bootstrapping Service **112** to verify the reports of attestation sent by the Identity Agent **120.** The IMS **110** includes also the repository **111** containing i) information on each workload, ii) policies associated to each workload for the attestation, iii) attributes to be included as verifiable credentials in the Verifiable Identity Document, and iv) golden measurements related to each attestation selectors for the verification of the attestation report. Regarding i), the information on each workload can include the number and the type of end-points for the workload (e.g., internal virtual link or external virtual link) that will determine the number of identities needed for each workload. This information may be in an external repository and requested when they are needed. Regarding ii), the repo **190** includes policies associated to each workload for the attestation, and may further include attestation selectors that are chosen by the service provider or Operator. Attestation selectors may include one or more of but not limited to these ones: a hash of the workload for integrity verification; the trust domain of the workload (namespace); the container ID/identifier where the workload is instantiated; the geo location; the identity of the orchestrator that instantiated the VF instance and/or the time of instantiation. These attestation selectors will be used by the attester to produce measurement and build the attestation report.

The identity Management Server includes the key manager **111** and ID document signing **113** that will request the signed certificates to the relevant Certificate Authority **170.** An interface IMS Certificate Authority (IMS-CA) interface may be used for his purpose. The IMS **110** includes a registration function for the respective VF/VFC and exposes an associated registration API to external entities (e.g. NFV orchestrator NFV-MANO entity). This registration function includes a VF identifiers generator. This registration of the VF is done at the time of instantiation of the VF and the corresponding VFCs. During this registration the IMS 110 exposes also an API to the Identity Agent and/or Identity wallet (see API **114** in FIG. 1.) using the interface IMS-IA.

The Identity Management Server **110** may be split between different servers. In a first embodiment, a server contains the bootstrapping service and the associated repository with selectors, policies and golden measurement, commonly named remote attestation server. In a second embodiment, a server provides the VF identifiers. In a third embodiment, a server signs the identity documents with the optional involvement of a Certificate Authority (CA) also named certificate management server.

For each of **FIGS 2A-2C****,** the Identity Agent **120** comprises a repository **123,** an attester **124** and a VID Generator **125.** This Identity Agent 120 is instantiated in a Container Infrastructure Service (CIS) Instance of a CIS Cluster node 128. It may be implemented in the VF/VFC in another embodiment. The repository **123** includes the policies and entries (e.g. attestation selectors) for the attestation of VF and VF components associated with the workload and corresponding VFIDW. The attester **124** provides the attestation reports for the identity agent software, and does so for each software of the VNF/VNFC instances that are associated to this agent in the CIS Cluster Node. The attestor **124** may provide similar/additional functionality to the VC Issuer **122** as shown in FIG. 1. The VID (Verifiable ID Document) generator **125** generates the signed Verifiable Identity Document with eventually the involvement of the external certificate authority **170,** through a Certificate Signing Request (CSR) sent to the Identity Management Server **110** . The Identity Agent **120** exposes an API to the Identity Management Server **110** and to the VF and/or respective VFIDW-C (Identity wallet) **150.** See API **127** in FIG. 1. The VID Generator **125** may provide similar/additional functionality to the VID Controller **121** as shown in FIG. 1 for producing the Verifiable Identity Document (see VID **131** in FIG. 1)

The Verifiable Identity Document (VID) **131** is signed by an authority within the trust domain and is valid only if the verification of this signature is successful. The format of the VID generally contains: i) an identifier, ii) a public key or certificate, iii) optional verifiable attributes, and iv) a valid signature applying to the whole VID. The identifier may be in a format of an URI with identification of the scheme and trust domain of the Virtual Function, for example, "scheme://trust-domain-name/path" as defined by RFC 3986. The scheme used by the Identity Document 131 specifies the format, where the trust-domain-name is the trust domain of the Virtual Function, which is defined by the operator owner of the Virtual Function (VF) and its path is an unique identification of a given workload (e.g. Virtual function instance or VF component instance). An example of such an identifier is "my-scheme://operator.maintenance.com/2bfcc5c-45bd-453".

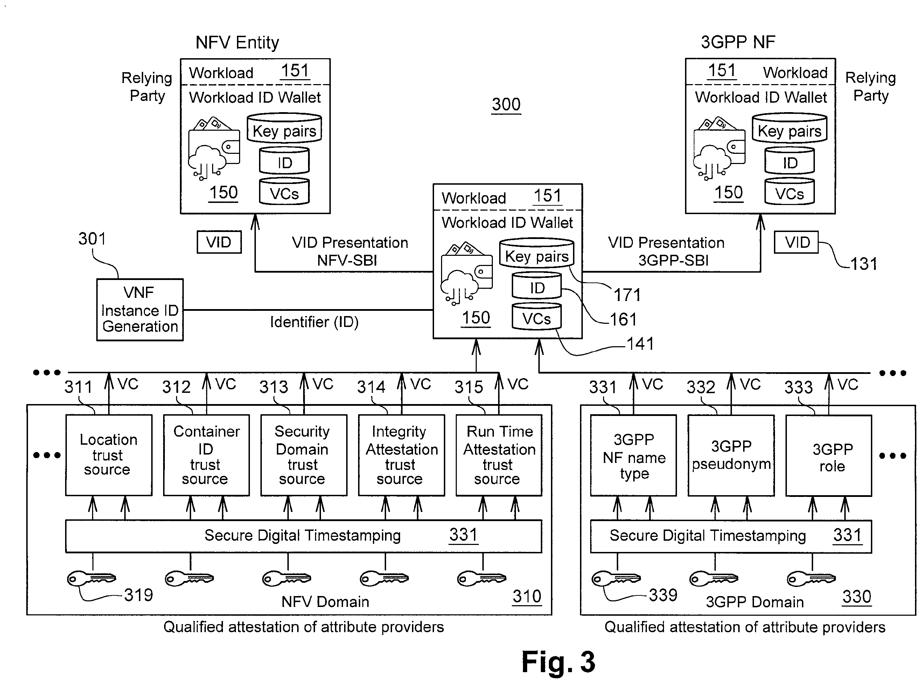

Referring now to **FIG. 3****,** an exemplary depiction of a system **300** is shown wherein a virtual function (VF) instance **301** (see middle left side) provides to the relying party, a VID presentation of a workload **151** for a given context. Here, it is a use-case scenario where the Relying Party operates within a NFV or a 3GPP system and verifies a workload **151** with its corresponding Virtual Function ID Wallet (VFIDW) **150.** Other systems are supported and contemplated.

In this example, a Relying Party exists in a NFV-SBI domain and/or a Relying Party exists in the 3GPP-SBI domain. This is a use case for workload verification by way of a Virtual Function ID Wallet **150** exemplifying vertical trust. It ensures that the workload **151** of a virtual function (VF) instance instantiated at lower domain layers (e.g. NFV) is what it claims to be to the upper entity layers (e.g. 3GPP, etc). Here, the VFIDW of the workload **151** of a virtual function instance receives an identifier **161** from a VNF Instance ID Generation **301** during the instantiation coming from the NFV platform relative to the workload **151** of a virtual function instance instantiation. Briefly, component **301** is the ID generator, and it is included in the IMS **110** and transmitted to the IDAgent. The ID Agent transmits this ID to be included in the VFIDW. Here, in FIG. 3, the Identity Agent **120** is part of the workload ID Wallet and receives the ID from the VNF instance ID generator **301** and VCs from different qualified attestation of attributes providers. The ID information and Verifiable Credentials **141** are stored in the digital wallet **150** as shown.

With respect to the NFV domain **310** for qualified attestation of attribute providers, the VCs, for example, could be trust sources for attributes of location **311,** container ID **312,** Security Domain **313,** Integrity Attestation **314** or Run Time attestation **315** as shown in the NFV domain **310** for qualified attestation of attribute providers. And in the same way, with respect to the 3GPP domain **330** for qualified attestation of attribute providers, some verifiable credentials (VCs) come from the 3GPP domain that are stored in the digital wallet **150.** There may be another 3GPP name of the virtual function, the synonyms, or the role at the 3GPP layer. Here for example, these trust attributes may be one of a 3GPP NF name type **331,** a 3GPP synonym **332,** or a 3GPP role **333** as shown in the 3GPP domain for qualified attestation of attribute providers **330.**

The Relying Party here in each domain (NFV domain **310** or 3GPP domain **330)** is able to receive the Identity of the virtual function (VF) from the VFIDW **150** with relevant information. And there could be additional information from the NFV domain, such as the attestation result, for example, needed by the 3GPP relying party. Here, the 3GPP relying party relies on the provided attestation results in view of the VFIDW **150** to trust the Virtual Function associated with the workload **151.** This reliance can be made dependent on a **policy** that establishes how the Identity presentation is presented. This policy can be defined by the service provider, or operator, in cases of telecom virtual network functions (VNFs). The relying party could also be part of a service based architecture (SBA). The identity presentation may depend on the SBA used to access the service provided. For example in case of 3GPP and NFV domains, the identity presentation will depend if a 3GPP network function access to the virtual function through the 3GPP-SBI or if a NFV-MANO entity (e.g. VNFM) access to the virtual function through the NFV-SBI

The embodiment of system **300** resolves problems associated with the slow evolution of telecom and cloud services towards distributed architecture with a multiplicity of micro-services virtualized in containers, with no inherent trust between services. It provides for not only "Horizontal trust" between cloud services, but also "Vertical trust" needed to allow verification that a Virtual Function (VF) is really what it claims to be in the context where it is used, and with an insurance of the integrity and trustworthiness of the system where it is instantiated. This "Vertical trust" addresses anticipation on the issue of the identification of micro-services cross-layers in the telecom infrastructure. The vertical trust propagates from the bottom domain layer to the top application layer (e.g. see NFV Entity and 3GPP NF) across an orchestration layer. On that point, one of the essential assets used to ensure zero-trust architecture and secure communication between Virtual Function instances is standardized trustworthy workload identity that ensure that the virtual functions are really what they claim to be. Here, the workload **151** is the software that is running in a virtualization container. It may be part of the VF instance or the VF instance itself, for example, if instantiated in a single virtualization container

Accordingly, the VFs here are enabled with a strong identity in the sense there is knowledge that the VF has been verified with a fit and intended purpose.. Here, a running instance may have multiple identity presentations depending on the context this identity is used. The identity document (VID) of the VF is composed of an Identifier, the VF instance attributes (e.g., the name of the VF for each specific domain, the role of the VF for each specific domain, etc.) as verifiable credentials (VCs) a signed certificate with the public key for the communication. There could be multiple identities and public keys for each VF instance or each VF component instance. A public key for communication with internal VF components, and public key for communication with external VFs or entities in specific domain. Creating identity for the virtual functions as seen here provides a lot of benefit. Moreover, providing VF identity by way of a digital wallet **150** provides an important context for portability, and the ability to be run in a sovereign jurisdiction or cloud, for example. These VF ID wallets **150** support runnable VF instances in 5G and private network use cases. These virtual functions have an identity that is tied directly to the operator, or alternatively, the owner of the virtual function.

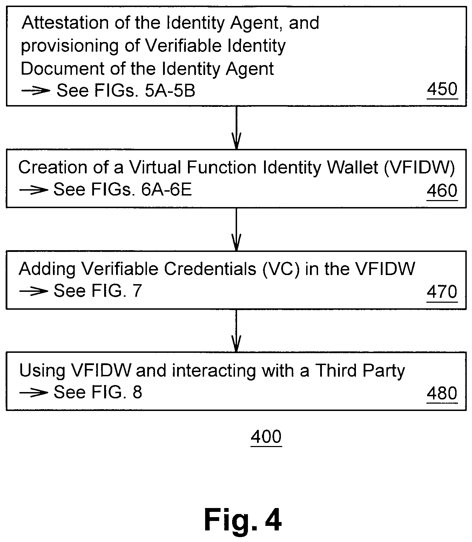

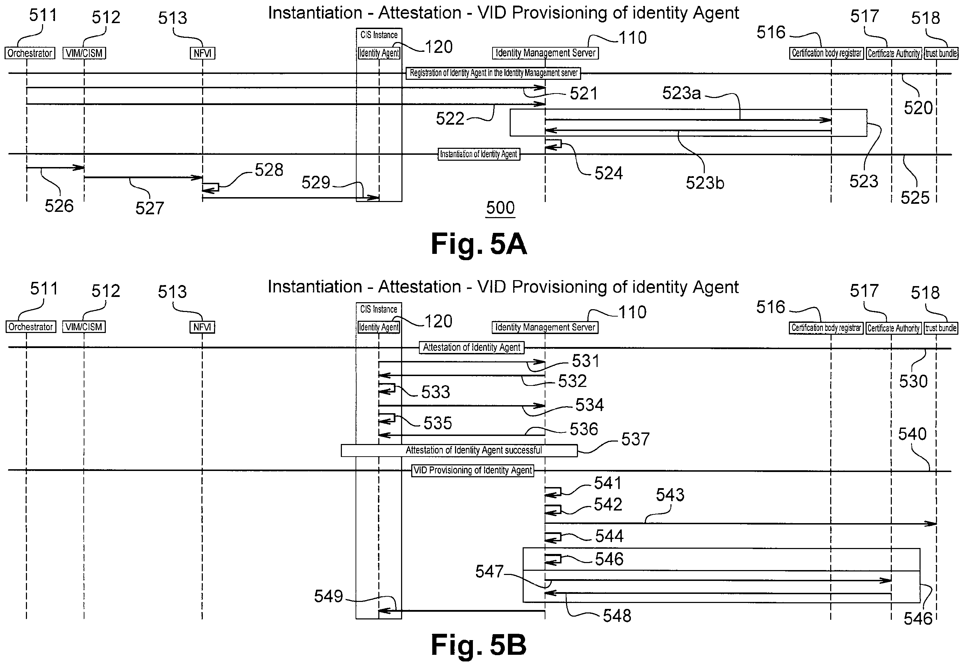

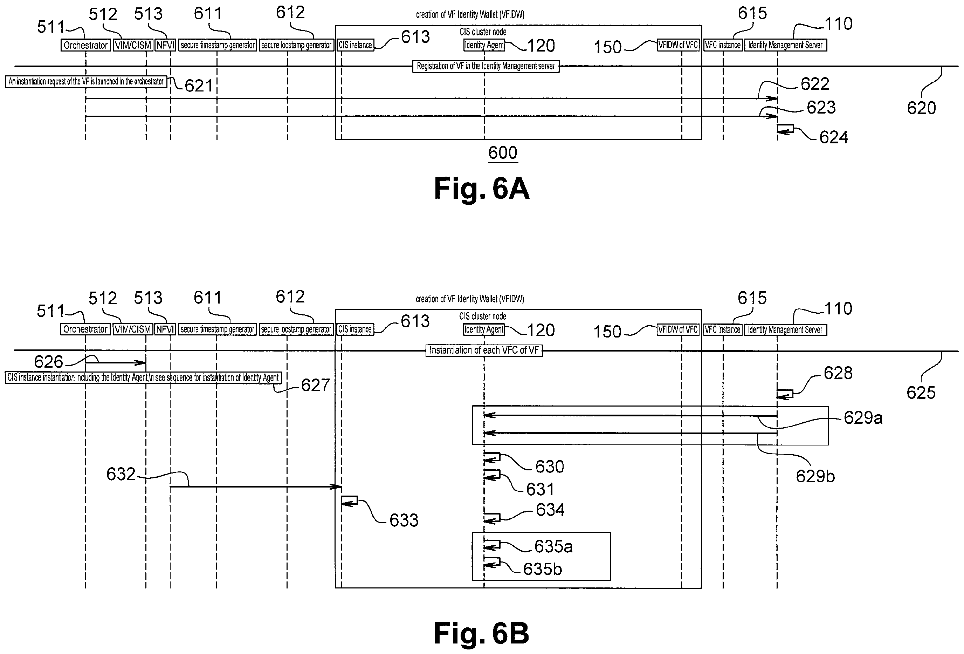

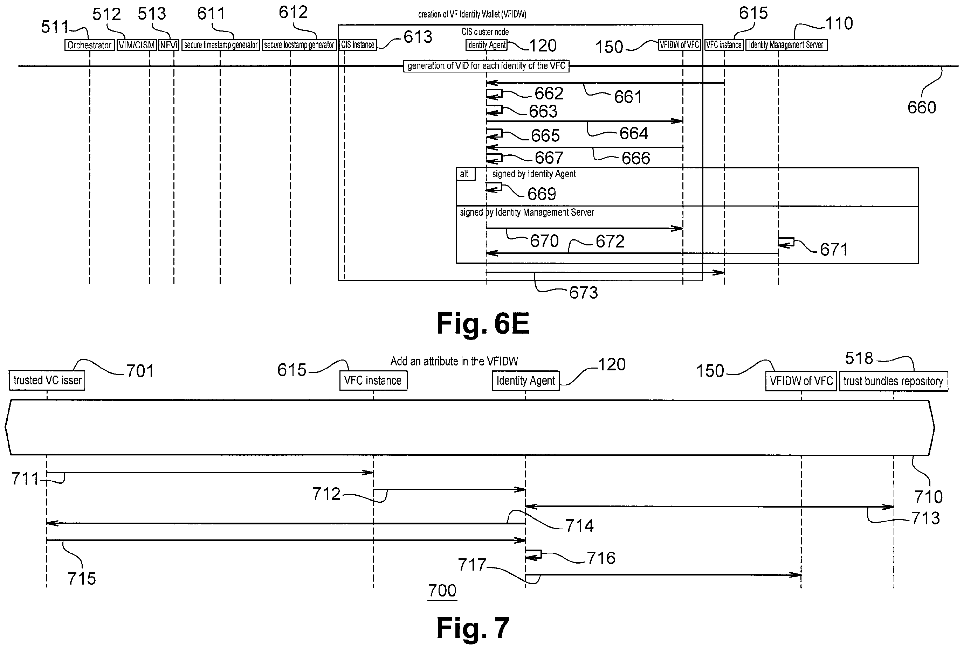

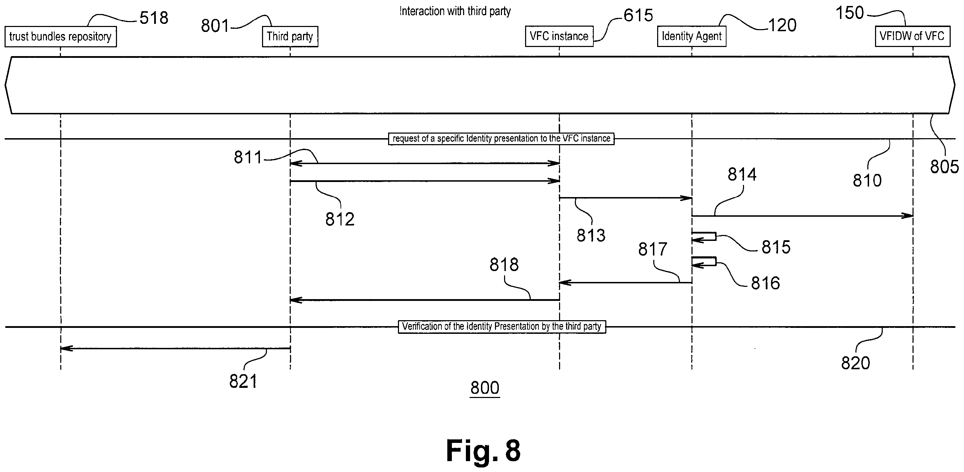

**FIG 4** illustrates a process for creating and using a VF ID Wallet (VFIDW) in a distributed and service-based architecture in accordance with one embodiment, though other architectures and zero-trust frameworks are contemplated. Step **450** corresponds to attestation of the Identity Agent and provisioning of an Identity document of the Identity Agent in accordance with one embodiment. One implementation of this step is shown as method 500 in FIGS 5A-5B. Step **460** corresponds to creating a VF Identity Wallet (VFIDW) in accordance with one embodiment. One implementation of this step is shown as method 600 in FIGS 6A-6E. step **470** corresponds to adding Verifiable Credentials in the VFIDW in accordance with one embodiment. One implementation of this step is shown as method 700 in FIG 7. step **480** corresponds to using the VFIDW and interaction with a Third Party. One implementation of this step is shown as method 800 in FIG 8.

The components shown in **FIGS 5-8** each include one or more hardware processors and hardware memory coupled to the one or more processors, wherein the memory includes computer instructions and data which when executed by the one or more processors causes them to perform the method steps or other operations disclosed. They may be connected over the network to other machines via a network communication device interface. In a networked deployment, they may operate in the capacity of a standalone mobile device, a client user machine in server-client user network environment, or as a peer machine in a peer-to-peer, or distributed, network environment. Components disclosed herein with hardware processors include, but are not limited, to Orchestrator **511,** VM/CISM **512,** NFV **513,** Identity Agent **120,** Identity Management System (IMS) **110,** Certification Body Registrar **516,** Certificate Authority (CA) **517,** Trust Bundle **518,** VC Issuer **701,** and Third party **801.** These components may include sub-components (VID Controller 121, VC Issuer 122, KMS 113, BS 112) also included a HW processor and memory with computer instructions and data. The VFC **615** (and any relevant VNF, VNC, VM, VNFC, Workload), CIS Instance **613,** VFIDW **150** may all operate in accordance with the principles described herein and execute as running firmware, software or applications on one or more hardware processors with memory in accordance with some embodiments. As an example, VC **141** and VID **131** information of a VFIDW **150** may be digitally stored in memory and retrieved from a component by way of a hardware processor. In some embodiments, the VFIDW **150** executes by way of one or more hardware processors with hardware memory coupled to the one or more processors having computer instructions and data which when executed by the one or more processors causes them to perform operations of the VFIDW **150.**

**FIGS 5A-5B** depicts one implementation of a method **500** corresponding to step **450** of **FIG 4** for attestation of the Identity Agent and provisioning of an Identity document of the Identity Agent in accordance with one embodiment. The method **500** is not limited to the steps shown and the order may vary according to various architecture configurations. When discussing the method **500,** reference may be made to numbered components shown in previous figures. The method in one embodiment is enabled by way of an Orchestrator **511,** a VM/CISM **512,** a NFV **513,** the Identity Agent **120,** the Identity Management System (IMS) **110,** a Certification Body Registrar **516** and a Certificate Authority (CA) **517.** The Trust Bundle **518** is stored in the Trusted Bundles Repository **(190** see FIG. 1).

Briefly, the series of steps of method **500** ahead are important to build the trust of the entire system. Identity Agent 120 is a sensitive application that requires to be implemented in a confidential computing environment. The Identity Agent **120** is a process preferably implemented in a Hardware Mediated Execution Enclave (HMEE) as defined in ETSI-NFV or Hardware-based trusted execution environment as defined in Confidential computing Consortium, also named secure enclave or confidential computing environment. The identity agent **120** is first verified in integrity running on a system that has been verified as well, which establishes an attestation chain. For this attestation, the bootstrapping (see BS 112 in FIG. 1) provided by the confidential computing environment is used. After mutual authentication between the Identity Agent **120** and the Identity Management Server 110, the verification of the attestation is done in the Identity Management Server 110. A standardized protocol for attestation is used between these two entities. This attestation proves that the identity agent is correctly instantiated in a HMEE and that its integrity is correct.

After successful attestation, the Identity Agent **120** receives from the Identity Management Server 110 i) its VID, ii) the key pair, iii) trust bundles, and iv) identifiers. Re i) the VID may contain different verifiable credential such as a certification certificate with at least the level of approval delivered and signed by a certification body. This proves that the Identity Agent 120 and the identity wallet implementation (VFIDW 150) is compliant to some certification policies, for example, security policies. The Identity Management Server 110 may retrieve the certification as verifiable credential either in the identity agent package used for the instantiation of the Identity Agent **120** or using a request to the certification body registrar 516. The Identity Management Server **110** generates this VID and signs it with its private key or requests the signature to the Certificate Authority **517** using a Certificate Signing Request (CSR). Re ii), the Key pair associated to the certificate included in the VID. Re iii), the trust bundles information includes the public keys of different issuers of verifiable attributes of the different trust domains and location of this repository. These trust bundles are used for the verification of the VIDs. Re iv) the Identifiers of the VF and VFC associated to this Identity agent are included if these are known at this step.

The method step group **520** is directed to Registration of Identity Agent in the Identity Management Server. Step **521** corresponds to a registration request of Identity Agent. Step **522** corresponds to transmission of parameters policies for attestation and certification certificate signed by certification body if available in the package of Identity Agent. Step **523** is optional. Step **523a** corresponds to a request signed certification certificate for this Identity Agent. At step **523b** the signed certification certificate is sent. At step **524,** all registration parameters in this identity management server repository are stored.

The method step group **525** is directed to instantiation of the Identity Agent. At step **526** the VF instantiates on request. At step **527** a Container Infrastructure Service (CIS) instance instantiation occurs including the identity Agent. At step **528** the CIS Instance integrity image is verified and launched. At step **529** a configuration of parameters for attesting e.g. license Management Server Public Key is completed.

**FIG 5B** is a continuation of method **500.** The method step group **530** is directed to attestation of Identity Agent. At step **531** a boot is requested. At step **532,** attestation is performed on request. At step **533** a key pair is generated for attestation. At step **534** transmission of public Key is performed. At step **535,** generation of (golden) measurement occurs. At step **536,** attestation on protocol-transmission of the quote by the Identity Agent and verification by Identity Management Server with the golden measurement is done. At step **537,** attestation of Identity Agent is deemed successful.

The method step group **540** is directed to VID Provisioning of Identity Agent. At step **541,** a key pair is created for the Identity Agent. At step **542,** an Identifier for the Identity Agent is created. At step **543,** the ID and public key is stored in the trust bundle. At step **544,** the CSR for the Identity document of the Identity Agent is created, including the certification certificate as verifiable attribute and timestamping. Box **545** shows alternate approaches. At step **546,** for self-signed VID, the Identity Management server signs the Certificate with its own private key. Alternatively, for signature with external certificate authority, at step **547** a Certificate Signing Request for the Identity Document occurs, and at step **548** the signed VID for the Identity Agent is returned. At step **549,** the VID of the Identity Agent and trust bundles are transmitted.

**FIGS 6A-6E** depicts one implementation of a method **600** corresponding to step **460** of **FIG 4** for creating a VF Identity Wallet (VFIDW) in accordance with one embodiment. The method **600** is not limited to the steps shown and the order may vary according to various architecture configurations. When discussing the method **600,** reference will be made to numbered components shown in previous figures. The method in one embodiment is enabled by way of an Orchestrator **511,** a VM/CISM **512,** a NFV **513,** the Identity Agent **120,** and the Identity Management System (IMS) **110.** A secure timestamp generator **611** and secure location stamp generator **612** are included. Within the CIS cluster node, the CIS instance **613** and the VFIDW **150** of VNC Instance are introduced. The VFC instance **615** is associated with the workload **151** (see previous figures). Briefly, method **600** occurs when an instantiation of the VF is requested by the orchestrator. This step contains several sub-steps as shown in FIGS 6A-6E.

**FIG 6A** depicts a method group **620** directed to registration of VF in the IMS 110, where all registration parameters (e.g. policies for attestation (list of selectors for attestation), number of identities for the VF and for each VFC of the VF) are stored in the repository of the Identity management server. An example implementation of this is shown in the following steps.

At step **621,** an instantiation request of the VF is launched in the orchestrator 511. At step **622,** a registration request of VF is performed. At step **623** transmission of parameters e.g., policies for attestation (attestation selectors) occurs. This includes number of identities for VF and for each components (VFC) of VF. At step **624,** all registration parameters are stored in the identity management server repository.

**FIG 6B** is a continuation of method 600 and depicts a method group **625** directed to instantiation of each VFC of VF in a CIS cluster node. This method group includes the instantiation of the identity agent if this Identity agent has not been instantiated before in the CIS cluster node, the generation of Identifiers, transmission of all parameters to the Identity Agent with storage in Identity agent repository. An example implementation of this is shown in the following steps.

At step **626,** a VF instantiation request occurs. At step **627,** a CIS instance is instantiated including the Identity Agent (see sequence for instantiation of Identity Agent). At step 628, generation of Identifiers for VF and each VFC occurs. In one embodiment, at step 629a, IDs and selectors for VF and each VFC and associated golden measurements are transmitted. In an alternate embodiment, at step **629b,** IDs and selectors for VF and each VFC are transmitted. At step **630** selectors, ID's, and golden measurements are stored in the Identity Agent repository. At step **631,** creation of the VFIDW with storage partitions for VF and each VFC occurs. At step **632,** a VFC instantiation request is performed. At step **633,** creation of a container and instantiation of the VFC in the container occurs. At step 634, retrieval of attestation selectors for this VFC in the repository occurs. In one embodiment at step **635a,** retrieval of attestation selectors for this VFC and associated golden measurements in the repository occurs. In an alternate embodiment, at step **635b,** retrieval of attestation selectors for this VFC in the repository occurs.

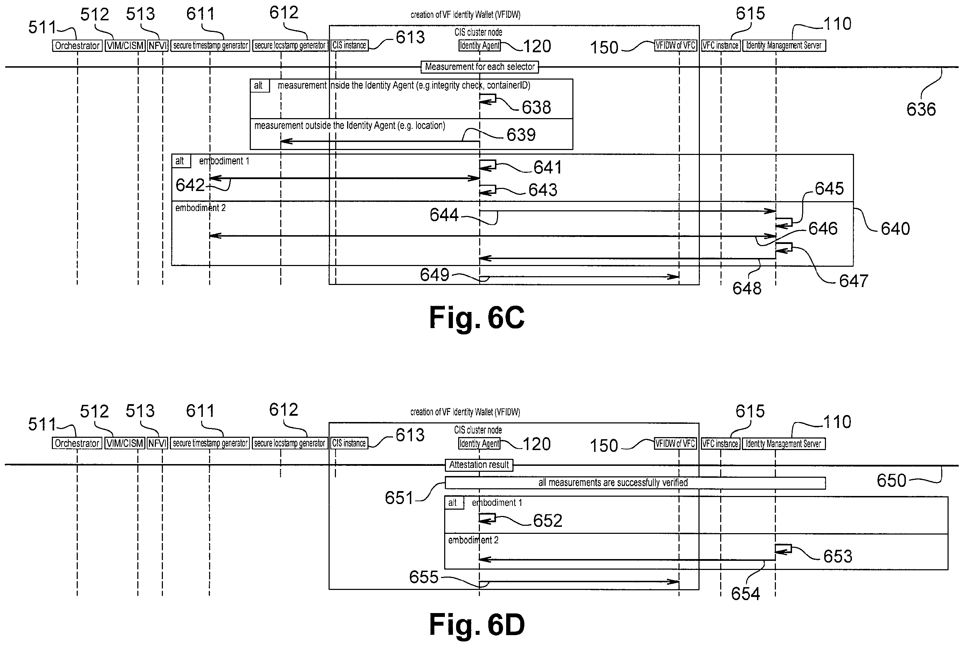

**FIG 6C** is a contuation of method 600 and depicts a method group **636** directed to measurements of each VFC for each attestation selector, where, after retrieval of selectors list, measurement for each selectors is done. The measurements are issued from trusted source (e.g., trusted locstamp generator, trusted location generator, etc.). Verification of the measurements against the golden measurements is performed either in the Identity Agent 120 in a first embodiment, or in the Identity management server 110 as a second embodiment. After verification of each measurement a verifiable credential is generated for this attribute. An example implementation of this is shown in the following steps.

In the first embodiment, inside the Identity Agent (e.g., integrity check, container ID), at step **638** a measurement of VFC according to the selector is made. In the second embodiment, for a measurement outside the Identity Agent (e.g. location), a retrieval of the location stamp of the infrastructure signed by the secure location stamp generator occurs at step **639.** In one embodiment, as shown in step **641,** verification of the measurement against the golden measurement for the selector occurs. At step **642,** retrieval of the current timestamp using a standard protocol (e.g. PTP) occurs. At step **643,** creation of the corresponding Verifiable Credential signed with the Identity Agent private key occurs. In an alternate embodiment, at step **644,** attestation verification request for this VFC/selector occurs. At step **645,** verification of the measurement against the golden measurement for the selector is performed. At step **646,** retrieval of the current timestamp using a standard protocol (e.g. PTP) occurs. At step **647,** creation of the corresponding Verifiable Credential (VC) signed with the Identity Management Server private key occurs. At step **648** the VC is transmitted, and at step **659,** the VC is stored in the VFIDW 150 of the VFC.

**FIG 6D** is a continuation of method 600 and depicts a method group **650** directed to an attestation result. Here, when all measurements for all selector are successfully verified, the verifiable credential for attestation result is created, signed and stored in the VFIDW. The measurement and attestation result may be triggered at the end of instantiation and/or when VID is requested by the VFC (see first request of the next sub-step, generation of VID for the VFC, corresponding to **660** of FIG 6E). An example implementation of this is shown in the following steps.

At step **651,** all measurements successfully verified. In one embodiment, at step **652,** an "attestation OK" VC is created and signed by private key of identity agent 120. In an alternate embodiment, at step **653,** an "attestation OK" VC is created and signed by private key of Identity Management Server 110. At step **654,** the "attestation OK" is transmitted. At step **655,** the "attestation OK" VC is stored in the VFIDW 150 of the VFC.

**FIG 6E** is a continuation of method 600 and depicts a method group **660** directed to generation of VID for each identity of the VFC. Here, after retrieval of an identifier in the identity Agent repository, and following the generation of a key pair and retrieval of the default list of attributes needed for the endpoint in identity Agent repository, the CSR of the VID is created with the Identifier, the public key and all Verifiable credentials corresponding to the list of attributes. The Certificate is signed either by Identity Agent in one embodiment or by the Identity management server in another embodiment. An example implementation is shown in the following steps.

At step **661,** request of a VID for a specific endpoint of the VFC instance occurs. At step **662,** retrieval of an identifier in the Identity Agent repository occurs. At step **663,** generation of a key pair for this identity occurs. At step **664** the Identifier and associated key pair are stored in the VFIDW 150 of the VFC. At step **665,** a default list of attributes needed for this endpoint in the Identity Agent repository is retrieved. At step **666,** retrieval of VC for the attributes occurs. Step **667** corresponds to creation of a Certificate signing request (CSR) for VID containing the Identifier, the verifiable credential for the attributes, the public key for this identifier and optionally the identity document of the Identity Agent. In one embodiment, it is signed by Identity Agent, where at step **669,** the VID is signed with Identity Agent's private key. In an alternate embodiment, it is signed by Identity Management Server, where at step **670** the CSR is transmitted, and the IMS signs the VID with Identity Management Server's private key, optionally involving the Certificate Authority (CA) at step **671.** At step **672,** the signed VID is transmitted, and at step **673** the VID for the VFC is sent.

**FIG 7** depicts one implementation of a method **700** corresponding to step **470** of **FIG 4**for adding Verifiable Credentials in the VFIDW in accordance with one embodiment. The method **700** is not limited to the steps shown and the order may vary according to various architecture configurations. When discussing the method **700,** reference will be made to numbered components shown in previous figures.

Here, a trusted VC issuer requests to add an attribute in a VFIDW for a specific end-point. This request is transmitted to the Identity Agent of the VF instance. After mutual authentication between the identity agent and the trusted VC issuer, the Verifiable credential for the attribute is transmitted to the Identity Agent, that verifies the verifiable credential using the trust bundles repository, after successful verification the VC for the attribute is stored in the VFIDW. The identity agent notifies the success of the operation to the VC Trusted issuer. An example implementation of this is shown in the following steps.

At step **710,** a trusted VC issuer may be a virtual function in a domain (e.g. a Virtual Function in the 3GPP domain) the desires to add an attribute to a VFC instance for a specific end-point, attribute that will be requested when another virtual function of this domain will communicate with the VFC (see sequence interaction with a relying party). At step **711** transmission of a request to add an attribute of the VNF instance end-point (e.g. a role) occurs. At step **712,** the request is sent to the Identity Agent 120. At step **713,** information of the trust VC issuer in the trust bundle is retrieved. At step **714,** a mutual authentication of the "trusted VC issuer" is requested. At step **715,** after successful mutual authentication, the VC is transmitted. At step **716** verification of the VF with information retrieved in the trust bundles repository occurs. At step **717,** after successful verification, the VC is stored in the VCIDW

**FIG 8** depicts one implementation of a method **800** corresponding to step **480** of **FIG 4** for using the VFIDW and interaction with a Third Party. The method **800** is not limited to the steps shown and the order may vary according to various architecture configurations. When discussing the method **800,** reference will be made to numbered components shown in previous figures.

Here, A third party may be a virtual function in a domain (e.g. a Virtual function in the 3GPP domain) and desires to communicate with a VFC instance on a specific end-point, and request a verifiable identity document of the VF instance. To add trust on the VF instance, the third party requests some specific attributes (as Verifiable Credentials) to be added in the Identity document. The Identity document is a specific identity presentation of the VFC instance. The request is transmitted to the identity Agent that retrieves the VC of the attributes in the VFIDW and creates a new VID containing the VFC identifier, the public key and the VCs requested, and signs the document that is transmitted through the VFC instance to the third party. The third party verifies the document with the information (public keys and identifier) retrieved in the trust bundles repository. An example implementation of this is shown in the following steps.

At step **805,** a third party may be a virtual function in a domain (e.g. a Virtual function in the 3GPP domain) that desires to communicate with a VFC instance on a specific end-point, and request a verifiable identity document of the VF instance. To add trust on the VF instance, the third party requests some specific attributes (as Verifiable Credentials) to be added in the identity document. At step **810,** a specific Identity presentation to the VFC instance is requested. At step **811,** mutual authentication using the default identity document (identifier + default attribute + Public key) occurs. At step **812,** an Identity presentation with a list of attributes is requested to the VFC instance end-point. At step **813,** the request is sent to the Identity Agent. At step **814,** attributes for this end-point are retrieved in VFIDW of the VFC instance. At step **815,** creation of the CSR of the corresponding VID occurs. At step **816,** the VID is signed. At steps **817** and **818** the signed VID is transmitted. At step **820,** the Identity Presentation by the Third Party is verified. At step **821,** the third party verifies the Identity Presentation (VID) received from the VFC instance using the VFC identifier, the public keys of the trusted VC issuer, of the Identity Agent retrieved in the trust bundles repository.

### Other Embodiments

In other embodiments, an HSM and/or Key Management System (KMS) can be used to service the generation of key pairs. The HSM or KMS ensures the key pairs are generated by a device that ensures good quality (cryptographically secure) of key pairs. In one arrangement, a communication environment comprising an HSM or KMS may communicate with the VFIDW **150** for instance identification of the Virtual Function **151.** Consider for example, the HSM may provide for cryptographic key management of the keys **319** for the NFV domain **310,** and the keys **339** used in the 3GPP domain **320** of trust, as directed to the qualified attestation of attribute providers. Use of the VFIDW **150** is a unique approach to HSM operations for establishing trust with micro-services in a zero-trust architecture using a trustable identity document issued by a micro-service VFIDW **150** as proposed and described in the previous figures. **The** HSM or KMS is suitable for use with a VFIDW **150** for securely identifying a Virtual Function Instance.

The HSM is a physical computing device that, among other capabilities, safeguards and manages digital keys, performs encryption and decryption functions for digital signatures, and provides for strong authentication and other cryptographic functions. As a security hardened unit, the HSM records tamper evidence, such as visible signs of tampering or logging and alerting, and provides for tamper responsiveness such as deleting keys upon tamper detection. The HSM **10** contains one or more secure cryptoprocessor and sensor chips to prevent tampering and bus probing, or a combination of chips in a module that is protected by the tamper evident, tamper resistant, or tamper responsive packaging. In operation, the HSM comprises one or more processors and memory coupled to the one or more processors, wherein the memory includes computer instructions and data which when executed by the one or more processors causes the one or more processors to perform its operational steps.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure.

## Claims

1. A system **100** for a Virtual Function Identity (ID) Wallet (VFIDW) **150** for Virtual Functions (VFs) in a distributed and Service-Based Architecture (SBA), the system comprising and **characterized by**:
an Identity Management Server (IMS) **110** that manages and issues identities in a trust domain, and holds information about its identity agents and a workload **151;**
an Identity Agent **120** for
proofing identities of the workload **151,** calling the workload, and securely communicating with the IMS **110,**
producing a Verifiable Identity Document (VID) **131** and Verifiable Credentials (VCs) **141** for the workload **151** of a VF instance of a VF, and
managing a Virtual Function ID Wallet (VFIDW) **150** containing identity information from an identifier **161,** keypairs **171,** the VID **131** and the VCs **141** associated with the workload **151** of the VF instance of the; and
a Trusted Bundle Repository **190** containing a mapping of IDs associated to VID **131** with information, such as public keys, associated to the VID **131** and VCs **141** from which a Relying Party **160** communicatively coupled to Trusted Bundle Repository **190** verifies the workload **151** from the VID **131** and VCs **141** to trust execution of the workload **151,**
wherein the VFIDW **150** with the Identity Agent **120** provides an identity presentation of the workload **151** to the Relying Party **160** to enable trust with the VF, by adding relevant attributes from the VFIDW **150** described in security policies that prove identity and correct instantiation of the workload **151** of the VF instancem
wherein the IMS **110,** ISA **120,** and Trusted Bundle Repository **190** each include one or more hardware processors with hardware memory coupled to the one or more processors having computer instructions and data which when executed by the one or more processors causes them to perform operations of the system **100.**

2. The system of claim 1, wherein the Identity Agent **120** comprises:
a VID Controller **121** producing the Verifiable Identity Document (VID) **131,** which contains an Identifier, verification verifiable attributes and related document and credential information related to the VFIDW **150;** and
a VC Issuer **122** producing the VCs **141,** wherein the VC Issuer is a trusted party providing qualified attestation of the verification verifiable attributes in the VFIDW **150.**

3. The system of claim1, wherein the Identity Agent **120** comprises:
an attester **124** that provides attestation reports for identity agent software and for each workload **151** related to VF/VFC instances that are associated to Identity Agent **120** in a CIS Cluster Node;
a repository **123** with policies and selector entries for the attestation of the workload **151** related to VF or VF components; and
a Verifiable Identity Document (VID) generator **125** to produce the VID **131** by way of an Identity Management Server 110 and an external Certificate Authority (CA) **170.**

4. The system of claim1, wherein the VFIDW **150** is paired with a workload **151** that is a virtualization container comprising an identity, and wherein each workload **151** of a VFC **211** includes a VFIDW **150** that provides said identity of the VF instance.

5. The system of claim 3, wherein the workload **151** of the VF instance is software that runs in a virtualization container, and the workload identity ensures that the VF is trustworthy.

6. The system of claim 4 establishes trust with micro-services in a zero-trust architecture using the VFIDW **150** as a trustable micro-service identity document issued by the micro-service, and the zero-trust architecture comprises a multiplicity of micro-services virtualized in containers that are individually trusted each by way of a separate VFIDW, wherein trust is established amongst micro-services using the VID **131** issued by the VFIDW **150** for a respective VF.

7. The system of claim 1, further comprising a policy defined by a service provider or an operator of a telecom network, whereby the Relying Party **160** receives an Identity of the Virtual Function (VF) from the VFIDW **150** with relevant information in accordance with the policy.

8. The system of claim 1, wherein the VFIDW **150** provides an Identity presentation of the VF to the Relying Party **160** with attributes such that the VC **131** is relevant to a context and a trust domain where these identities of the VF are used,
wherein the Relying Party **160** relies on public keys stored in the Trusted Bundles Repository **190** to verify the validity of the VID **131** and the validity of verifiable credential (VC) inside the VID **131** and establish identity and status of the workload **15.**

9. A Virtual Function Identity (ID) Wallet (VFIDW) **150** for Virtual Functions (VFs) in a distributed and service-based architecture (SBA), the VFIDW comprising and **characterized by**:
identity information associated to a workload **151** of a VF instance of a VF, the identity information expressed by way of an Identifier **161,** key pairs **171,** a Verifiable Identity Document (VID) **131** and Verifiable Credentials (VCs) **141** contained in the VFIDW;
wherein information relevant to verify the VID and VC are stored in a Trusted Bundle Repository **190** available to a Relying Party **160,**
wherein the VFIDW provides to the Relying Party **160** an identity presentation by way of the VID **131** and with the attributes as VCs **141** relevant to a domain where identities of the Virtual Function Instances are used,
wherein the VFIDW **150** with the Identity Agent **120** provides an identity presentation to the Relying Party **160** to enable trust with the workload **151** of the VF, by adding relevant attributes from the VFIDW **150** described in security policies that prove an identity and correct instantiation of the workload **151** of the of the VF instance
wherein the VFIDW **150** executes by way of one or more hardware processors with hardware memory coupled to the one or more processors having computer instructions and data which when executed by the one or more processors causes them to perform operations of the VFIDW **150.**

10. The VFIDW of claim 9 contains separate entries for identities of multiple VF instances of multiple workloads each corresponding to a specific end-point, with attributes and parameters for each entry listing verifiable credentials needed in the VID 131 provided to the Relying Party connected to a respective end-point.

11. The VFIDW of claim 9 includes a process to request to the Identity Agent **120,** the VID **131** of a third party, other entity, or other VF requesting communication with the VF.

12. The VFIDW of claim 9 is partitioned for each component of the VF in a Cluster Node, and an Identity Agent 120 contains a key management system (KMS) with an access control to the VFIDW.

13. The VFIDW of claim 9, wherein the VFIDW is included in a VF instance (VFI) or VFC instance (VFCI) in a secure Hardware Mediated Execution Enclave (HMEE).

14. The VFIDW of claim 9 wherein an Identity Agent **120** is entirely included in the VF, or a VFC, in a secure Hardware Mediated Execution Enclave (HMEE), and the VFIDW contains only identity information of the VF, or the VFC managed by the Identity Agent 120.

15. A method for providing a Relying Party with a trust establishment of micro-services in a zero-trust architecture using a Virtual Function Identity (ID) Wallet (VFIDW) **150** for Virtual Functions (VFs), **characterized by**:
an Identity Management Server (IMS) **110** that manages and issues identities in a trust domain, and to hold information about its identity agents and a workload **151** of the VF;
an Identity Agent **120** that proves identities of the workload **151** by way of attestation, calling the workload, and securely communicating with the IMS **110,** produces a Verifiable Identity Document (VID) **131** and Verifiable Credentials (VCs) **141** for the workload **151** of a VF instance of the VF, and creates a Virtual Function ID Wallet (VFIDW) **150** containing identity information from an Identifier **161,** key pairs **171,** the VID **131** and VCs **141** associated with the workload 151 of a VF instance of the VF; and
a Trusted Bundle Repository **190** containing information relevant for verifying the VID **131** and VCs **141** from which a Relying Party **160** communicatively coupled to Trusted Bundle Repository **190** verifies the workload **151** from its associated VID 131 and VCs **141** to trust execution of the workload **151,**
wherein the VFIDW **150** with the Identity Agent **120** provides an identity presentation to the Relying Party **160** to enable trust with the VF for the workload **151,** by adding relevant attributes in the VFIDW **150** described in security policies that prove identity and correct instantiation of the workload **151** of the VF instance.
